# FASCICULE DE BREVET EUROPEEN

(11) **EP 3 472 067 B1**
(45) Date de publication et mention de la délivrance du brevet: **10.03.2021**
(21) Numéro de dépôt: 17734142.7
(22) Date de dépôt: 17.06.2017
(51) Int. Cl.: B65B 1/06, B65B 1/18, B65B 25/02, A01F 25/14

(54) **DISPOSITIF DE STOCKAGE SOUS VIDE ET DE TRANSPORT DE GRAIN**
VORRICHTUNG ZUM LAGERN UNTER VAKUUM UND TRANSPORT VON KÖRNER
DEVICE FOR STORING UNDER VACUUM AND TRANSPORT OF GRAIN

(30) Priorité: 17.06.2016 FR 1670323
(43) Date de publication de la demande: 24.04.2019
(73) Titulaire: Poujaud, Frédéric, 31340 Villemur-sur-Tarn (FR)
(72) Inventeur: Poujaud, Frédéric, 31340 Villemur-sur-Tarn (FR)
(74) Mandataire: Verdure, Stéphane
(86) Numéro de dépôt international: PCT/IB2017/053611
(87) Numéro de publication internationale: WO 2017/216777

(56) Documents cités:
- EP-A1- 2 409 935
- EP-A2- 0 968 642
- WO-A1-03/000568
- FR-A1- 2 724 152
- FR-A1- 2 912 124
- IT-A3- MN 980 029

## Description

### Domaine Technique

La présente invention se rapporte de manière générale au stockage sous vide et au transport de grain.

Elle concerne plus particulièrement un dispositif conçu et adapté pour le stockage sous vide et le transport sous vide de graines ou semences agricoles humides ou sèches.

L'invention trouve des applications, en particulier, dans l'agriculture et dans l'industrie agroalimentaire.

### Arrière-plan Technologique

Dans la suite de ce document on utilisera les termes « grain » et « graines » de manière générique pour désigner à la fois les semences agricoles et les produits agricoles destinés à la consommation, comme les céréales par exemple, qui sont susceptibles de nécessiter un stockage et/ou un transport. Néanmoins les applications possibles du dispositif ne sauraient être réduites à ces exemples de contenus.

Le stockage du grain se fait habituellement à l'air ambiant, par exemple dans des silos à grain, ce qui a pour effet d'accélérer la dégradation du produit : prolifération des bactéries, oxydation, prolifération d'insectes, absorption d'eau, dégradation enzymatique, notamment. Pour limiter ces phénomènes, une solution couramment utilisée consiste à stocker à basse température en chambre froide pour ralentir le processus de dégradation. Une autre solution implique une étape de séchage (déshydratation) de la matière première avec une application régulière d'insecticide liquide, ou par fumigation gazeuse d'insecticide dans une enceinte hermétique. Enfin, la méthode du stockage « sous vide » permet de placer les graines dans un environnement inerte et, par conséquent ralentir considérablement les divers processus de dégradation.

Par « stockage sous vide », on entend plus exactement le stockage dans un environnement ou la pression est inférieure à la pression atmosphérique. Des dispositifs de stockage sous vide existent pour certains produits de grande consommation. Le principe de base est le suivant : après insertion de l'élément dans un sac hermétique, celui-ci est scellé et l'air restant à l'intérieur est aspiré. En fonction des objets insérés à l'intérieur les objectifs recherchés ne sont pas toujours les mêmes : conservation d'aliments et de produits frais, gain de place (pour les couettes et les sacs de couchage par exemple), protection des vêtements, etc.

Par ailleurs, le transport du grain peut se faire à l'aide de maxi-sacs communément appelés « bigbags » selon la terminologie anglo-saxonne. Sur le plan logistique, cela permet un conditionnement modulaire et standardisé à l'échelle internationale des marchandises à transporter. Le bigbag standard et générique qui est utilisé est dimensionné pour loger sur une palette de surface égale à 1 m x 1 m. La hauteur peut varier entre 1 m et 2,5 m, en fonction du contenu. Pour le grain, les bigbags sont composés de plastiques épais (généralement en polypropylène) (épaisseur supérieure à 100 microns) et tissés de manière à assurer la résistance mécanique du bigbag. Il arrive qu'une couche interne soit ajoutée de manière à apporter une meilleure étanchéité. Si le conditionnement du grain en bigbag facilite le transport, il ne permet pas de stocker la marchandise de façon durable car l'environnement intérieur du bigbag n'est pas clos.

### Art Antérieur

Le document EP 0132482 divulgue une installation de stockage sous vide pour matière première agricole, pour la conservation sous déshydratation lente de produits contenant une certaine quantité d'eau (telle que par exemple les céréales et les semences). L'installation se présente sous la forme d'un silo étanche à l'intérieur duquel on crée et on entretient un certain niveau de vide en fonction de l'hygrométrie du produit stocké. Cependant, une telle installation industrielle est purement statique. Par conséquent, elle convient pour le stockage mais ne permet pas le transport du contenu. En conclusion ce dispositif reste donc techniquement inadapté au stockage sous vide et au transport en quantités industrielles de grains.

Le document EP 2149508 révèle un conteneur de transport de liquide. Le système d'une capacité aux alentours de 1 m³, comporte une cage en métal disposée sur une palette. Dans la cage en métal se trouve une poche intérieure en matière plastique. Une enveloppe extérieure (une sorte de bâche) fixée à la cage métallique est disposée entre la poche intérieure et la cage métallique. La poche intérieure n'est pas attachée à l'enveloppe extérieure et peut être remplie, jusqu'à atteindre le volume délimité par la cage en métal. Ce système est utilisable pour le transport d'éléments liquides ou granuleux, ce qui couvre de nombreux types de denrées agricoles différentes. Néanmoins il ne permet pas le conditionnement de graines sous vide.

Le document FR 2912997 présente un dispositif de stockage compressif adaptable. Le dispositif comprend un sac de stockage contenu dans une boîte de stockage. Ce sac de stockage est destiné à recevoir des articles textiles compressibles (couettes, vêtements, ...). Il est équipé d'une valve anti-retour d'air de façon à pouvoir être vidé de son air. La boite de stockage, qui protège le sac de stockage, a une taille adaptable en fonction du degré de remplissage du sac de stockage. Le dispositif décrit utilise donc le principe de stockage sous vide, mais est conçu pour des produits inertes en vue de procurer un gain de place pour le stockage des articles textiles dans un contexte d'usage domestique. Ce document ne divulgue aucun enseignement utile pour le stockage sous vide et le transport de grain en quantités industrielles.

Le document WO2006/012528 divulgue un dispositif pour conserver des produits sous vide. Selon les termes du document, il s'agit d'une poche en matière plastique comportant au moins une couche de polymère, avec en périphérie de la poche une ouverture donnant accès à l'espace intérieur. Cette ouverture est refermable à l'aide d'un dispositif de manière à sceller l'intérieur de la poche. Le dispositif de fermeture comporte deux niveaux : des rainures parallèles qui s'imbriquent ainsi qu'une mixture de calfeutrement. La poche comprend une valve sur laquelle peut venir s'enclencher une pompe portable pour aspirer l'air à l'intérieur de la poche. Cette pompe est munie d'un système de séparation air/liquide. Le dispositif selon cette invention utilise le principe de stockage sous vide mais est conçu pour des produits alimentaires de consommation courante à l'échelle individuelle ou familiale : conservation de restes de repas, et de produits frais, principalement.

Le document EP 0968642 divulgue un dispositif pour traiter du fourrage, spécialement des balles rondes de foin, comprenant un conteneur hermétique comme un sac plastique, une valve anti-retour associée à une entrée du sac, un bouchon de fermeture. Lors d'une opération de traitement concernant l'intérieur du sac, le sac empli de fourrage est déposé sur une assise, et recouvert hermétiquement par une cloche détachable afin de contrôler la pression à l'extérieur du sac. A l'issue de cette opération, la cloche est levée afin de restaurer la pression atmosphérique en son sein et la balle de foin, enveloppée dans son propre sac, peut être stockée.

### Résumé de l'Invention

L'invention vise à supprimer, ou du moins atténuer, tout ou partie des inconvénients de l'art antérieur précités, en proposant un dispositif techniquement adapté au stockage sous vide et au transport de graines en quantités industrielles.

A cet effet, un premier aspect de l'invention propose un dispositif de stockage sous vide et de transport sous vide de graines sèches ou humides par anaérobie, selon la revendication 1.

L'utilisation du principe de l'inertage sous vide permet d'éviter la fermentation (sauf fermentation anaérobique, par ex. alcoolique) lorsqu'il s'agit de graines humides comme le maïs destiné à l'alimentation du bétail par exemple. Dans le cas des graines sèches comme les semences, l'inertage évite les nuisances et la prolifération des insectes permettant de conserver la bonne qualité germinative des semences et graines.

Dans des modes de réalisation pris isolément ou en combinaison, en outre :
- l'enceinte peut être un sac souple et hermétique en matière thermoplastique adapté à la conservation de produits agricoles ;
- l'élément de remplissage peut être une bouche qui s'inscrit dans la continuité de l'enveloppe de l'enceinte ;
- l'élément de remplissage peut être scellé thermiquement ;
- la valve anti-retour d'air peut être directement intégrée à la surface de l'enceinte ;
- l'enceinte peut comprendre des capteurs adaptés pour détecter ou mesurer des informations relatives aux graines stockées dans l'enceinte hermétique fermée ;
- l'enceinte peut comprendre en outre au moins une étiquette RFID pour identifier le dispositif parmi une pluralité de dispositifs similaires ;
- l'enceinte ou les moyens de transport et de manutention associés peuvent comprendre en outre une balise de géolocalisation.

L'invention apporte ainsi une solution technique simple et originale à la problématique du stockage sous vide et du transport sous vide du grain à l'échelle industrielle. En particulier, le dispositif selon l'invention apporte une solution technique à ce problème en permettant trois fonctions simultanément :
- la conservation sous vide du grain, avec tous les avantages et les économies d'échelle que cela apporte ;
- la possibilité de transporter ce grain d'une façon modulaire et qui s'inscrit dans les standards logistiques internationaux, tout cela sans interrompre la chaîne du vide ;
- une utilisation simple et qui nécessite peu de moyens opérationnels et équipements supplémentaires.

### Brève Description des Dessins

D'autres caractéristiques et avantages de l'invention apparaîtront encore à la lecture de la description qui va suivre. Celle-ci est purement illustrative et doit être lue en regard des dessins annexés sur lesquels :
- la Figure 1 est une vue d'une enceinte hermétique d'un dispositif selon l'invention;
- la Figure 2 est une vue d'un châssis de moulage utilisable pour le remplissage de l'enceinte de la Figure 1;
- la Figure 3 est une vue d'un équipement pour le remplissage de l'enceinte de la Figure 1 en utilisant le châssis de moulage de la Figure 2 ;
- la Figure 4 est une vue d'un mode de réalisation du dispositif de stockage et de transport selon l'invention ; et,
- la Figure 5 est un schéma, en coupe d'une valve convenant pour la mise sous vide d'une enceinte d'un dispositif selon la Figure 1 ou la Figure 4.

### Description détaillée de modes de réalisation

Dans la description qui va suivre des modes de réalisation du dispositif de stockage sous vide et de transport sous vide de graines à l'échelle industrielle sont donnés à titre d'exemples non limitatifs. Dans cette description et dans les dessins annexés, les mêmes éléments ou des éléments similaires portent les mêmes références numériques d'une figure à l'autre.

La méthode de conservation du grain mise en œuvre grâce au dispositif selon l'invention est une méthode de conservation par anaérobie. En effet, après le remplissage avec du grain d'une enceinte étanche à tous types de gaz, la fermeture étanche de l'enceinte puis sa mise sous vide, la respiration de la microflore à l'intérieur de l'enceinte consomme l'oxygène restant dans l'enceinte. Le gaz carbonique produit occupe alors le volume interstitiel entre les graines et inhibe ainsi toute activité enzymatique. Les tests effectués ont montré que l'oxygène restant à l'intérieur de l'enceinte est consommé au plus tard dans les 15 heures qui suivent la mise sous vide. La méthode implémentée selon l'invention permet donc de placer le grain dans un environnement inerte et par conséquent de ralentir considérablement les divers processus de dégradation.

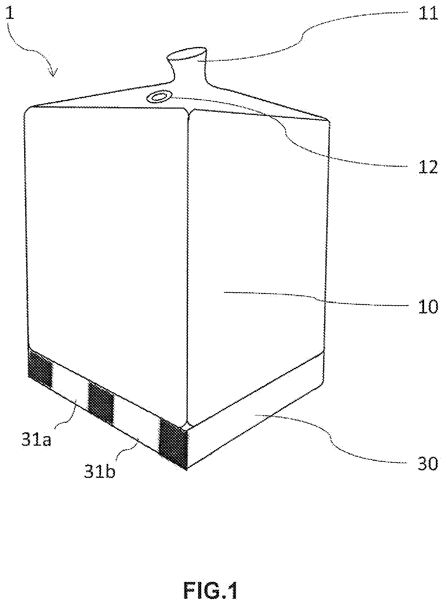

En référence au schéma de la Figure 1, un sac 10 faisant office d'enceinte de stockage complètement hermétique à tout type de gaz est représenté et délimite un espace intérieur apte à recevoir des graines sèches ou humides.

Le sac 10 comprend une bouche de remplissage 11 pouvant être scellée une fois le sac rempli de grain et avant d'aspirer l'air intérieur pour faire le vide dans l'enceinte. Dans un mode de réalisation, la bouche de remplissage 11 s'inscrit dans la continuité de l'enveloppe de l'enceinte 10.

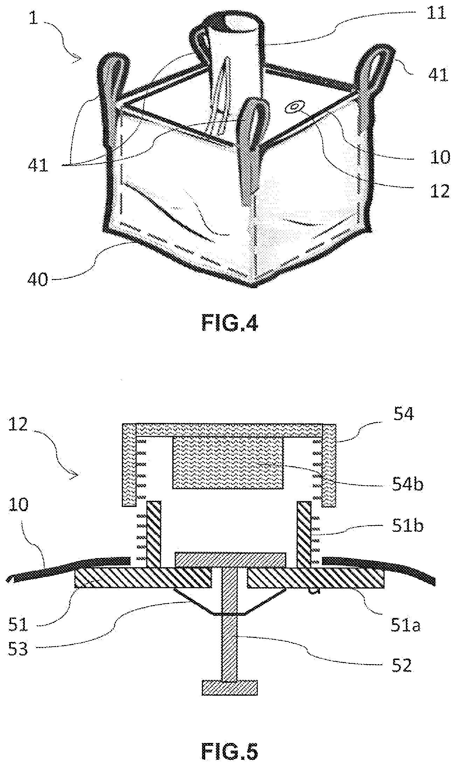

Le sac 10 comprend par ailleurs au moins une valve 12 anti-retour d'air, pour permettre l'évacuation de l'air intérieur, par exemple par aspiration, avec un dispositif pour calfeutrer la valve qui sera décrit plus loin en référence au schéma de la Figure 5.

Concernant plus particulièrement l'enceinte 10, il s'agit préférentiellement d'un sac en polymère thermoplastique souple, complètement hermétique à tout type de gaz. Selon un mode de réalisation préféré, la forme du sac s'apparente à celle d'un ballon de baudruche, en ce sens que sa surface est uniforme et faite en un seul corps (i.e., sans raccords ni coutures) et que le sac ne présente qu'une seule ouverture, au niveau de la partie supérieure, formant bouche de remplissage. La forme du sac peut être cylindrique, mais elle est de préférence cubique, pour des raisons de gain d'espace à l'occasion du stockage et/ou du transport de plusieurs sacs identiques ou similaires disposés côte-à-côte, par exemple sous un hangar ou sur le plateau d'une remorque de camion respectivement.

Dans un exemple de réalisation du sac 10, la paroi du sac peut être constituée d'au moins deux couches de polyéthylène (PE) ou de Polyamide/Polyéthylène (PAPE). L'épaisseur totale du sac 10 peut être comprise entre 180 et 200 microns, ce qui lui permet de conditionner sans risque de déchirure ni déformation de sa surface, tout type de graines sèches ou humides issues de et/ou destinées à l'agriculture, avec des contenus de sac qui peuvent atteindre des masses de l'ordre de plusieurs tonnes. En outre, un sac de stockage ainsi conçu permet d'assurer l'imperméabilité aux gaz durant une période d'au moins un an.

De préférence, le sac 10 est assez épais pour empêcher les rongeurs de le trouer. La nature du matériau dont il est constitué, et son épaisseur, permettent également au sac 10 de protéger son contenu de tout type de rayonnement qui puisse être nocif pour la conservation des graines. Ainsi, par exemple, le sac peut être opaque et fournir une certaine protection contre les rayonnements ultraviolets et les effets du soleil. Dans des modes de réalisation, il est possible d'ajouter des additifs à la matrice du polymère thermoplastique dans lequel le sac est fabriqué, pour optimiser et améliorer ses propriétés, comme par exemple l'étanchéité et la protection contre le rayonnement ultraviolet, ou les propriétés de biodégradabilité. Bien entendu, cette liste de propriétés n'est pas exhaustive.

Enfin, selon un mode de réalisation préféré, le volume du sac une fois rempli peut se situer aux alentours de 1m³. Sa taille et sa forme, notamment en ce qui concerne le fond, lui permettent de se placer aisément à plat sur une palette classique, par exemple une palette de 1 m x 1 m. Cet exemple n'est nullement limitatif, d'autres dimensions comme par exemple 0,8 m x 0,8 m ou 1 m x 1,2 m peuvent être préféré selon les spécificités de l'application envisagée. La hauteur du sac peut être égale à 1 m, 1,2 m, 1,5 m ou 2 m, par exemple, voire un peu plus. De préférence, le rapport entre la hauteur du sac et sa base (i.e., le plus grand côté du fond du sac), n'est pas supérieur à 3. Ainsi, le sac rempli de grain garde une bonne homogénéité et une stabilité satisfaisante en toutes circonstances, et notamment lors d'opérations de chargement/déchargement dans un véhicule de transport, ou de manutention dans un espace de stockage comme un hangar agricole.

La bouche de remplissage 11 du sac, selon un mode de réalisation, peut se présenter sous la forme d'un rétrécissement du diamètre de l'enceinte au niveau de la partie supérieure, comme montré à la Figure 1. Toutefois, cette bouche de remplissage 11 est de préférence suffisamment grande pour autoriser un débit acceptable de remplissage de l'enceinte 10.

Pour la fermeture hermétique du sac, les contours de la bouche de remplissage 11 de l'enceinte peuvent être scellés thermiquement entre eux. D'autres méthodes de fermeture étanche aux gaz peuvent également être envisagées, en combinaison ou séparément, comme par exemple une fermeture à l'aide de pinces ou de rainures parallèles.

L'enceinte de stockage 10 peut être disposée sur une palette 30 en bois, brut ou reconstitué, ou en matière plastique ou encore en matériau composite.

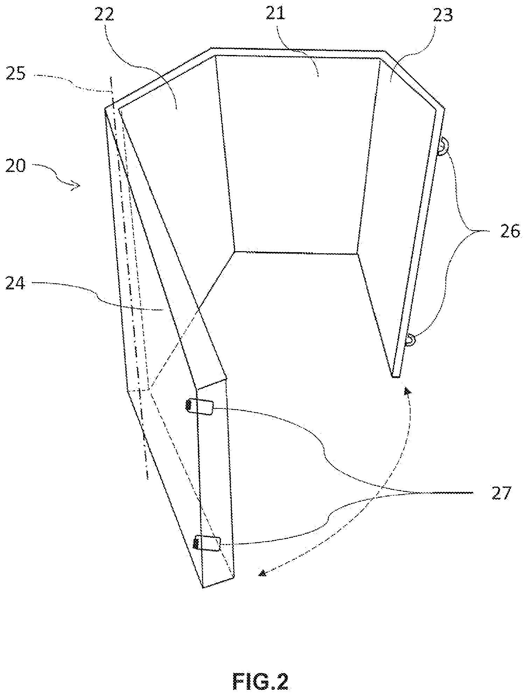

En référence à la Figure 2, on va voir maintenant qu'une propriété de la conservation sous vide peut être avantageusement mise à profit pour l'utilisation d'un dispositif de stockage et de transport tel que le dispositif 1 de la Figure 4.

En effet, lorsque l'air est aspiré, la matière première à l'intérieur de l'enceinte hermétique 10 se compacte et devient un bloc solide, qui est maintenu compact et rigide en raison d'une force intrinsèque de cohésion des graines. Selon une variante d'utilisation du dispositif, il est possible d'utiliser un « moule », de forme cubique ou cylindrique par exemple, afin de donner une forme plus avantageuse au résultat final.

La Figure 2 montre une représentation schématique d'un moule 20 de forme cubique. Ce moule peut être réalisé en forme de quadriptyque, avec quatre panneaux plans indépendants l'un par rapport aux autres : un panneau de fond 21, deux panneaux latéraux 22 et 23, et un panneau avant 24. L'indépendance entre les panneaux dont il est fait mention ici s'entend d'une capacité de démontage permettant de désolidariser les panneaux entre eux, et/ou d'une articulation entre deux panneaux adjacents permettant de replier des éléments du quadriptyque l'un contre l'autre.

Dans l'exemple représenté, le panneau avant 24 est ouvert par rapport au panneau latéral 23. Des éléments complémentaires de fixation 26 et 27, disposés sur le panneau 26 et sur la panneau 27, respectivement, permettent l'assemblage de ces deux panneaux. Des éléments de même nature peuvent être prévus sur chacun des panneaux, en sorte que le quadriptyque peut être entièrement démonté, avec les quatre panneaux désolidarisés les uns des autres. En variante, au moins deux panneaux adjacents, tels que les panneaux 22 et 24 dans l'exemple représenté à la Figure 2, peuvent être solidaires l'un de l'autre en étant articulés l'un par rapport à l'autre par une charnière, de manière à pouvoir être repliés l'un vers l'autre autour de l'axe de rotation 25, dans l'exemple.

Ces dispositions permettent un démontage et un remontage aisé et rapide du moule. Un même moule peut alors servir au remplissage de plusieurs sacs successivement. En pratique, un seul moule tel que le moule 20 représenté peut être suffisant pour une utilisation dans un exploitation agricole classique. Le stockage du moule 20 est également rendu plus facile par cette indépendance entre les panneaux, qui est propre aux quadriptyques.

Ainsi qu'on l'a compris, l'utilisation du moule est la suivante. Avant remplissage, le sac 10 est placé dans le moule par exemple sur la palette 30 de la Figure 1. Puis le moule 20 est mis en place autour de la palette. On notera que la projection au sol du moule correspond sensiblement aux dimensions de la palette 30. Tous les panneaux 21, 22, 23 et 24 du moule 20 sont fixés entre eux. Puis le sac 10 est rempli de grain. Le sac et son contenu prennent la forme du moule. La hauteur des panneaux 21, 22, 23 et 24 du moule 20 est au moins égale voire légèrement supérieure à la hauteur du sac. Une fois que le remplissage du sac est terminé, la bouche de remplissage 11 est fermée, par exemple elle est thermo-soudée. Puis on procède à l'aspiration de l'air résiduel dans le sac, via la valve 12. Après aspiration de tout l'air depuis l'intérieur vers l'extérieur du sac, celui-ci conserve la forme du moule même lorsque le moule est enlevé en débloquant et séparant les éléments de fixation 26 et 27.

Les panneaux 21, 22, 23 et 24 du moule 20 peuvent être réalisés en acier, en aluminium, en structure alvéolaire, comme des panneaux de porte de maison ou similaires. Avantageusement, le moule selon les modes de réalisation décrits ci-dessus est manu-portable, c'est-à-dire positionnable par un ou plusieurs opérateurs sans engin de levage.

En variante, les panneaux 21, 22 et 23 sont réalisés en béton, et peuvent être implantés au sol de façon permanente, et seul le panneau avant 24 peut s'ouvrir, en tant que porte, pour la mise en place et l'enlèvement du dispositif 1 de la Figure 1, à savoir le sac 10 et sa palette associée 30.

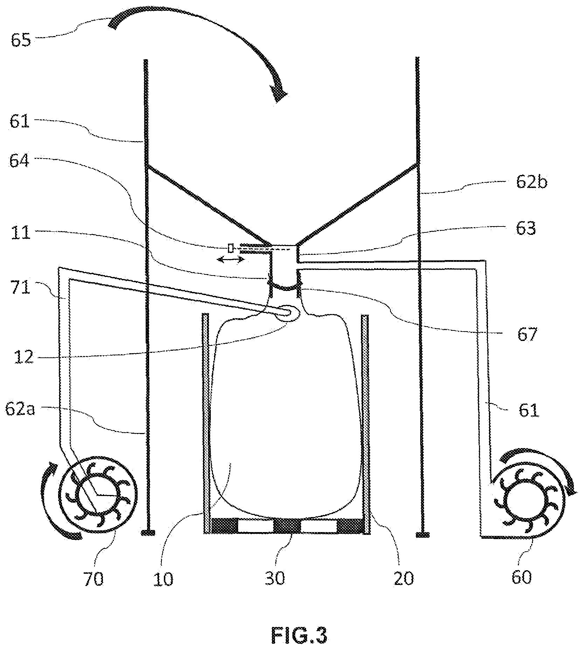

La Figure 3 illustre une situation concrète d'utilisation du dispositif 1 de l'invention. Dans cette mise en situation, le sac 10 est placé dans un moule cubique 20 tel que décrit ci-dessus en regard de la Figure 2, et sur une palette classique 30. Au-dessus de cet ensemble se trouve une benne de grain 61, qui repose au sol par l'intermédiaire de poteaux tels que les poteaux 62a et 62b.

Du grain est amené à se déverser dans la trémie de la benne 61, comme indiqué par la flèche 65, par exemple à l'aide d'un conduit supporté par une potence, ou par un mécanisme à vis sans fin ou à tapis roulant (éléments non représentés).

La bouche de remplissage est engagée autour du conduit de sortie de la benne 61. Dans un mode de mise en œuvre, on assure un gonflage de la poche formée par le sac 10, préalablement à son remplissage avec du grain, pour le mettre en forme, sensiblement, dans le moule 20. A cet effet, l'installation peut comprendre une soufflante 60 associée à une tubulure 61 qui communique avec le conduit de sortie de la benne 61, en aval de sa guillotine 64. Afin d'éviter les fuites d'air à ce niveau, il est possible de placer un garrot 67 autour de la bouche 11 pour la serrer contre le tube de sortie de la benne 61, en-dessous de la guillotine 64.

La guillotine de la benne étant fermée, la soufflante 60 est mise en fonctionnement, en sorte que de l'air est insufflé dans le sac 10. Ceci a pour effet de le gonfler. Le sac 10 se plaque alors sensiblement contre les parois internes du moule 20. Un fois ce résultat obtenu, la soufflante 60 peut être arrêtée.

Lorsque la guillotine 64 de la benne 63 est ouverte, le grain s'écoule par gravité à l'intérieur du sac 10 en passant par la bouche de remplissage 11. Le garrot 67 précité, autour de la bouche 11 de remplissage contre le tube de sortie de la benne 61, permet alors d'éviter les fuites de grains à ce niveau.

Une fois le sac 10 rempli, la guillotine est refermée, ce qui stoppe la chute du grain. Le sac est alors scellé au niveau de sa bouche de remplissage 11, qui à cet effet est détachée de la benne 61. Une fois le sac scellé, l'air intérieur est aspiré à l'aide par exemple d'un système de succion connecté à la valve anti-retour d'air 12 du sac 10. Enfin, la porte avant 24 (cf. Figure 3) du moule 20 peut être ouverte et le moule écarté. La palette 30 sur laquelle repose le sac 10 avec son contenu peut être retirée de l'enceinte du moule.

Concernant la méthode d'aspiration du fluide intérieur, un dispositif d'aspiration 70, externe au système, peut être utilisé. L'utilisateur peut par exemple choisir d'aspirer l'air intérieur en plaçant l'extrémité du tuyau d'aspiration 71 d'un aspirateur 70 de type industriel dans la valve 12. A titre purement informatif, il est suffisant de fournir une certaine puissance minimale de par exemple 250 W et une dépression minimale de par exemple 20 kPa afin d'obtenir un vide suffisant dans le sac pour que l'inertage de la marchandise agricole soit efficace.

En référence à la Figure 4, un mode de réalisation d'un dispositif de stockage sous vide et de transport de grain selon l'invention consiste à placer le sac hermétique 10 directement dans un sac de transport ou « bigbag » 40 (terme générique en langue anglo-saxonne, que l'on peut traduire par « maxi-sac » en français), puis de procéder au remplissage du sac hermétique 10 et à sa mise sous vide in-situ.

Le bigbag 40 est associé à l'enceinte 10 et comporte des moyens de manutention, sous la forme de ses quatre oreilles 41 qui permettent le levage du sac 10. Selon la taille du bigbag, et donc son poids chargé, cette manutention peut être réalisée soit manuellement par un ou plusieurs opérateurs, soit à l'aide d'un appareil ou engin de manutention. Dit autrement, le dispositif 1 est doté d'éléments facilitant la préhension manuelle ou mécanique, à savoir les sangles formant oreilles du bigbag 40 dans l'exemple représenté à la Figure 4.

Alors que le dispositif selon la Figure 1 (sac 10 associé à une palette 30) est particulièrement adapté à des « maxi sacs » de 1000 kilos ou plus, par exemple pour le stockage et le transport de graines humides pour l'alimentation pour bétail, par exemple, le mode de réalisation décrit ci-dessus en référence à la Figure 4 est adapté aussi pour des sacs de plus petites tailles, par exemple de quelques kilogrammes sous vide, i.e. 5 kg, 10 kg, 15 kg ou 20 kg par exemple. En effet, dans le domaine spécifique des semences, l'unité de stockage et de transport de graine sèches est souvent de cet ordre de grandeur, c'est-à-dire entre 5 et 20 kg.

Le sac hermétique est introduit vide dans le bigbag, et seule sa bouche de remplissage dépasse à l'extérieur via la bouche de remplissage du bigbag. Avant remplissage, il est possible de gonfler le tout en insufflant de l'air pour que le sac hermétique épouse les parois du bigbag. Après remplissage, la bouche du sac hermétique est thermo-soudée. Une fois la mise sous vide terminée, on peut également fermer la bouche de remplissage du bigbag.

L'homme du métier appréciera que, dans ce mode de réalisation, le bigbag 40 fait également office de moule puisqu'il donne au sac rempli la forme sensiblement cubique ou cylindrique définie par son enveloppe. Rappelons à cet égard que les bigbags sont fait de matériaux plastiques tressés et ne sont pas du tout élastiques.

On va maintenant décrire un mode de réalisation de la valve anti-retour d'air 12 en référence à la Figure 5.

On rappelle que la valve 12 empêche tout transfert de fluide gazeux depuis l'extérieur vers l'intérieur de l'enceinte. Selon un mode préféré de l'invention la valve comprend trois éléments : une fixation 51, un obturateur 52 et un capuchon 54.

La fixation 51 est par exemple réalisée en plastique rigide et de forme cylindrique. Elle peut être intégrée (par exemple collée) à la surface du sac 10, par une portion plane 51a de la fixation. Cette portion 51a présente en son centre un orifice dans lequel peut coulisser l'obturateur 52. Au niveau de la fixation 51, le sac de stockage présente une ouverture circulaire, dont le diamètre coïncide avec celui du conduit 51b (ou embout) de la valve 51. Idéalement ce conduit est la seule voie d'échange fluidique entre l'intérieur et l'extérieur du sac 10 après scellage du sac. La paroi extérieure de ladite fixation comporte des pas de vis qui permettent de venir visser le capuchon (fig.4, e).

L'obturateur 52 est l'élément qui permet le passage du fluide gazeux de l'intérieur vers l'extérieur mais pas l'inverse. A cet effet, il est couplé à la portion plane 51a de la fixation par un élément élastique 53, tel qu'une lame ressort, par exemple. Dans un mode de réalisation, l'obturateur 52 est fait en plastique souple et élastique, de type caoutchouteux. L'obturateur se présente sous la forme d'une tige avec deux disques, dont un à chacune des extrémités de la tige. La tige vient s'insérer dans l'orifice central de la portion plane 51a de la fixation. Le disque de grand diamètre reste à l'extérieur tandis que le disque de petit diamètre reste du côté intérieur de la paroi du sac 10. Les deux disques font office de butées qui limitent l'amplitude de la translation de la tige le long de l'orifice pour l'empêcher d'en sortir.

Lorsque l'on aspire du côté externe de la valve 12, l'obturateur 52 est également aspiré contre l'action du ressort 53, et glisse selon un mouvement de translation dans l'orifice la portion plane 51a de la fixation 51. Le disque intérieur, empêche toutefois l'obturateur de sortir complètement. Le disque extérieur est en position soulevé et laisse passer l'air de l'intérieur vers l'extérieur du sac 10. A l'inverse, lorsque l'enceinte 10 est sous vide, l'obturateur 52 est attiré vers l'intérieur et le disque extérieur vient se coller fortement à la fixation 51a et empêche ainsi l'air de rentrer dans le sac. A la Figure 5, l'obturateur 52 est ainsi représenté en position fermée.

Le capuchon 54 peut également être en plastique rigide. Sur la paroi intérieure du cylindre du capuchon 54, un pas de vis femelle permet de visser le capuchon sur un pas de vis mâle prévu sur la paroi extérieure de l'embout 51b de la fixation 51. Une fois le capuchon 54 vissé sur la fixation 51, un bloc élastique, par exemple en mousse de polyuréthane, vient appuyer fortement sur l'obturateur 52 afin d'assurer une meilleure herméticité de la valve 12.

La valve anti-retour d'air ne saurait se réduire au mode de réalisation décrit ci-dessus. L'homme du métier appréciera que d'autres types de valves anti-retour peuvent être utilisés, notamment les valves décrites dans les documents US 5,480,030 et US°5,931,189 ou encore dans les documents US 6,116,781 et US 6,357,915.

La présente invention a été décrite et illustrée dans la présente description détaillée et dans les Figures. La présente invention ne se limite pas aux formes de réalisation présentées. D'autres variantes et modes de réalisation peuvent être déduits et mis en œuvre par la personne du métier à la lecture de la présente description et des Figures annexées.

Par exemple, des modes de réalisation du dispositif de stockage et de transport peuvent prévoir la mise en place de capteurs pour détecter ou mesurer certaines informations se rapportant au contenu des sacs. En effet, une fois sous vide, il n'est pas possible d'accéder facilement au contenu d'un sac, et toute ouverture rompt la chaîne du vide au détriment de la conservation des graines. Des capteurs disposés dans le sac et interrogeables à distance, par exemple selon le protocole NRFC (de l'anglais « Near Range Field Communication »), ou disposés sur la paroi du sac et lisible depuis l'extérieur du sac, permettent de pallier ces inconvénients. A titre d'exemples non limitatifs on peut envisager, notamment : des capteurs d'humidité, de température, de taux de dioxyde de carbone, etc.

Dans d'autres modes de réalisation, encore, on peut en outre prévoir des étiquettes RFID (de l'anglais « Radiofrequency Identification ») pour l'indentification rapide de chaque unité de stockage. Par exemple, l'enceinte comprend au moins une étiquette RFID (ou « tags » en anglais) pour identifier le dispositif parmi une pluralité de dispositifs similaires. L'enceinte ou les moyens de transport associés peuvent également comprendre des balises de géolocalisation pour permettre de les suivre en temps réel pendant le transport et/ou de les tracer en cas de vol, etc.

## Revendications

1. Dispositif de stockage sous vide et de transport sous vide de graines sèches ou humides par anaérobie, comportant :
- une enceinte (10) hermétique à tout type de gaz ayant :
• au moins un élément de remplissage (11) permettant, en position ouverte de l'élément, le remplissage de l'enceinte avec des graines et permettant en outre, en position fermée dudit élément, la fermeture hermétique de l'enceinte, et
• au moins une valve (12) anti-retour d'air autorisant le transfert fluidique gazeux par aspiration d'air à travers la valve uniquement depuis l'intérieur de l'enceinte vers l'extérieur de l'enceinte,
**caractérisé en ce qu'**il comporte en outre :
- des moyens de transport et de manutention (40) associés à l'enceinte et comprenant un sac de transport (40) qui est adapté pour recevoir l'enceinte hermétique et qui présente des sangles formant oreilles (41) pour permettre la préhension par un utilisateur directement ou par un engin de levage.

2. Dispositif selon la revendication 1, dans lequel l'enceinte (10) est un sac souple et hermétique en matière thermoplastique adapté à la conservation de produits agricoles.

3. Dispositif selon la revendication 1, dans lequel l'élément de remplissage (11) est une bouche qui s'inscrit dans la continuité de l'enveloppe de l'enceinte (10).

4. Dispositif selon la revendication 1, dans lequel l'élément de remplissage (11) peut être scellé thermiquement.

5. Dispositif selon la revendication 1, dans lequel la valve (12) anti-retour d'air est directement intégrée à la surface de l'enceinte (10).

6. Dispositif selon l'une quelconque des revendications précédentes, dans lequel l'enceinte (10) comprend des capteurs adaptés pour détecter ou mesurer des informations relatives aux graines stockées dans l'enceinte hermétique fermée.

7. Dispositif selon l'une quelconque des revendications précédentes, dans lequel l'enceinte (10) comprend en outre au moins une étiquette RFID pour identifier le dispositif parmi une pluralité de dispositifs similaires.

8. Dispositif selon l'une quelconque des revendications précédentes, dans lequel l'enceinte (10) ou les moyens de transport et de manutention (40) associés comprennent en outre une balise de géolocalisation.

## Patentansprüche

1. Vorrichtung zum Lagern unter Vakuum und Transportieren unter Vakuum von trockenen oder feuchten Körnern durch Sauerstoffabschluss, Folgendes beinhaltend:
- eine gegen jede Gasart hermetische Einhüllung (10), Folgendes aufweisend:
• mindestens ein Füllelement (11), welches in offener Position des Elements das Füllen der Einhüllung mit Körnern ermöglicht, und weiter, in geschlossener Position des Elements das hermetische Schließen der Einhüllung ermöglicht, und
• mindestens ein Luft-Rückschlagventil (12), welches die gasförmige Fluidübertragung durch Ansaugen von Luft durch das Ventil hindurch, nur vom Inneren der Einhüllung nach außerhalb der Einhüllung ermöglicht,
**dadurch gekennzeichnet, dass** sie weiter beinhaltet:
- Transport- und Handhabungsmittel (40), die der Einhüllung zugeordnet sind, und einen Transportbeutel (40) umfassen, der angepasst ist, um die hermetische Einhüllung aufzunehmen, und der Gurte aufweist, die Ohren (41) bilden, um das Ergreifen durch einen Nutzer direkt oder durch ein Hebezeug zu ermöglichen.

2. Vorrichtung nach Anspruch 1, wobei die Einhüllung (10) ein flexibler und hermetischer Beutel aus thermoplastischem Material ist, das für die Konservierung von Agrarprodukten angepasst ist.

3. Vorrichtung nach Anspruch 1, wobei das Füllelement (11) eine Öffnung ist, die sich in die Durchgängigkeit der Hülle der Einhüllung (10) einfügt.

4. Vorrichtung nach Anspruch 1, wobei das Füllelement (11) thermisch versiegelt werden kann.

5. Vorrichtung nach Anspruch 1, wobei das Luft-Rückschlagventil (12) direkt in die Oberfläche der Einhüllung (10) integriert ist.

6. Vorrichtung nach einem der vorstehenden Ansprüche, wobei die Einhüllung (10) Sensoren umfasst, die angepasst sind, um Informationen in Bezug auf die in der geschlossenen hermetischen Einhüllung gelagerten Körner zu detektieren oder zu messen.

7. Vorrichtung nach einem der vorstehenden Ansprüche, wobei die Einhüllung (10) weiter mindestens ein RFID-Etikett umfasst, um die Vorrichtung aus einer Vielzahl von ähnlichen Vorrichtungen zu identifizieren.

8. Vorrichtung nach einem der vorstehenden Ansprüche, wobei die Einhüllung (10) oder die zugeordneten Transport- und Handhabungsmittel (40) weiter eine Geolokalisierungsbake umfassen.

## Claims

1. Device for the vacuum storage and vacuum transportation of wet or dry seeds under anaerobic conditions, including:
- a container (10) hermetically sealed against any type of gas, having:
• at least one filling element (11) which, when the element is in the open position, allows the container to be filled with seeds and also, when said element is in the closed position, allows the container to be hermetically sealed, and
• at least one air non-return valve (12) allowing gaseous fluidic transfer by sucking air through the valve only from the inside of the container toward the outside of the container,
**characterized in that** it further includes:
- transport and handling means (40) associated with the container and comprising a transport bag (40) suited to accommodating the hermetic container and which has straps forming ears (41) to allow it to be grasped directly by a user or by lifting gear.

2. Device according to claim 1, wherein the container (10) is a flexible and hermetic bag made of a thermoplastic material suited to the preservation of agricultural products.

3. Device according to claim 1, wherein the filling element (11) is a mouth which is inscribed in the continuity of the envelope of the container (10).

4. Device according to claim 1, wherein the filling element (11) may be heat sealed.

5. Device according to claim 1, wherein the air non-return valve (12) is integrated directly into the surface of the container (10).

6. Device according to any one of the preceding claims, wherein the container (10) comprises sensors suited to detecting or measuring information relating to the seeds stored in the sealed hermetic container.

7. Device according to any one of the preceding claims, wherein the container (10) further comprises at least one RFID label to identify the device from among a plurality of similar devices.

8. Device according to any one of the preceding claims, wherein the container (10) or the associated transport and handling means (40) further comprise a geotag.
